# EUROPÄISCHE PATENTSCHRIFT

(11) **EP 2 011 098 B1**
(45) Veröffentlichungstag und Bekanntmachung des Hinweises auf die Patenterteilung: **10.03.2010**
(21) Anmeldenummer: 07718403.4
(22) Anmeldetag: 24.04.2007
(51) Int. Cl.: G08B 21/02

(54) **VERFAHREN UND VORRICHTUNG ZUR ÜBERWACHUNG DER MAXIMALENTFERNUNG ZWEIER OBJEKTE**
METHOD AND APPARATUS FOR MONITORING THE MAXIMUM DISTANCE BETWEEN TWO OBJECTS
PROCEDE ET DISPOSITIF POUR LA SURVEILLANCE DE L'ÉLOIGNEMENT MAXIMAL ENTRE DEUX OBJETS

(30) Priorität: 25.04.2006 AT 6962006
(43) Veröffentlichungstag der Anmeldung: 07.01.2009
(73) Patentinhaber: Mission Control Design GmbH, 1060 Wien (AT)
(72) Erfinder: KAUFMANN, Hannes, 1140 Wien (AT)
(74) Vertreter: Weiser, Andreas
(86) Internationale Anmeldenummer: PCT/AT2007/000187
(87) Internationale Veröffentlichungsnummer: WO 2007/121500

(56) Entgegenhaltungen:
- EP-A- 1 613 030
- DE-C1- 19 850 654
- GB-A- 2 389 216

## Beschreibung

Die vorliegende Erfindung betrifft ein Verfahren und eine Vorrichtung zur Überwachung der Maximalentfernung zweier Objekte, insbesondere eines Kindes von seiner Aufsichtsperson, mit Hilfe zweier Sendeempfänger, von denen der erste periodisch Statusmeldungen bestimmter Sendeleistung an den zweiten sendet, wobei im zweiten Sendeempfänger ein Alarm ausgelöst wird, wenn der Empfang der Statusmeldungen abnimmt, und wobei in jeder Statusmeldung eine Angabe der Sendeleistung mitgesendet wird.

Ein Verfahren und eine Vorrichtung dieser Art sind aus der US 5 963 130 bekannt. Indem die Kommunikation zwischen den Sendeempfängern auf periodische Meldungen mit zwischenliegenden Pausen beschränkt ist, wird ein reduzierter Energieverbrauch erzielt. Die US 5 963 130 zeigt im Detail eine Kinderüberwachungsvorrichtung, bei welcher die Parent-Station die Empfangsfeldstärke der Polling-Antwort der Child-Station auswertet und mit einem Schwellwert vergleicht und, wenn der Schwellwert unterschritten wird, in die nächste Polling-Abfrage einen Leistungssteuerungsbefehl integriert und an die Child-Station sendet. Die Child-Station erhöht daraufhin ihre Antwort-Sendeleistung und integriert in ihre Antwort-Nachricht eine Leistungsangabe, daß sie nun mit hoher Leistung sende. Die von der Child-Station in ihrer Antwort angegebene Sendeleistung dient dazu, den Entfernungsalarm auszulösen: Wenn die Antwort mit hoher Sendeleistung gesendet wurde, wird sofort Alarm ausgelöst. Der von der Parent-Station an die Child-Station gesandte Leistungssteuerungsbefehl hängt somit stets nur von der Empfangsfeldstärke und ihrem Vergleich mit dem festen Schwellwert ab. Das Prinzip einer solchen Empfangsfeldstärkenauswertung ist nicht in der Lage zu erkennen, ob eine schwache Empfangsfeldstärke auf eine geringe Sendeleistung oder eine große Distanz zurückzuführen ist.

Das dokument EP 1613030 offenbart ein verfahren und eine vorrichtung nach bzw. dem oberbegriff der ansprüche 1 und 6.

Für den alltagstauglichen praktischen Einsatz einer Objektentfernungsüberwachung, insbesondere zur Überwachung von Kindern auf unbeabsichtigtes Entfernen, Verlaufen, Entführung usw., ist eine unter allen Umständen robuste und störungsunanfällige Erkennung einer Überschreitung einer Maximalentfernung unabdingbar, und dies alles bei minimalem Energieverbrauch. Die Erfindung setzt sich zum Ziel, ein Verfahren und eine Vorrichtung der eingangs genannten Art zu schaffen, welche diese Anforderungen erfüllen.

Diese Ziele werden in einem ersten Aspekt mit einem Verfahren der einleitend genannten Art erreicht, das sich gemäß der Erfindung dadurch auszeichnet, daß durch Vergleichen der Empfangsleistung mit der in einer Statusmeldung angegebenen Sendeleistung die für die nächste Statusmeldung zu verwendende Sendeleistung ermittelt und in einer Bestätigungsmeldung an den ersten Sendeempfänger zurückgesendet wird.

Durch den erfindungsgemäßen Vergleich der Empfangsleistung mit der in der Statusmeldung selbst angegebenen Sendeleistung wird die tatsächliche Dämpfung des Übertragungskanals gemessen, und zwar auch dann, wenn z.B. die Child-Station mit geringer Sendeleistung geantwortet hat. Dadurch ist eine besonders verläßliche Leistungsregelung und effektive Reduzierung der mittleren Sendeleistung möglich. Die Sendeleistung des die Statusmeldungen abgebenden Sendeempfängers wird mit jedem Kommunikationszyklus an die tatsächlichen Erfordernisse angepaßt und für den nächsten Kommunikationszyklus vorbereitet. Die erfindungsgemäße Lösung benötigt dazu in jedem Kommunikationszyklus nur einen einzigen Meldungsabtausch zwischen den Sendeempfängern, u.zw. eine einzige Statusmeldung und eine einzige Bestätigungsmeldung. Dadurch wird ein sehr geringer mittlerer Energieverbrauch erzielt, ohne die Zuverlässigkeit der Entfernungsüberwachung zu gefährden.

Gemäß einer bevorzugten Ausführungsform der Erfindung wird die für die nächste Statusmeldung ermittelte Sendeleistung auch bereits für das Senden der Bestätigungsmeldung selbst verwendet, wodurch der Energieverbrauch noch weiter gesenkt wird.

Eine weitere bevorzugte Ausgestaltung des Verfahrens der Erfindung zeichnet sich dadurch aus, daß beim genannten Vergleichen eine Differenz aus angegebener Sendeleistung und gemessener Empfangsleistung gebildet und mit einem Schwellwert verglichen wird und bei einem Schwellwertunterschreiten die für die nächste Statusmeldung zu verwendende Sendeleistung bis auf einen Minimalwert verringert, hingegen bei einem Schwellwertüberschreiten bis auf einen Maximalwert erhöht wird, wobei in letzterem Fall, wenn die angegebene Sendeleistung bereits den Maximalwert hat, der Alarm ausgelöst wird. Der Vergleich durch Differenzbildung gestattet.eine besonders einfache Implementierung des Verfahrens mit kostengünstigen 1-Chip-Mikrokontrollern, was eine Miniaturisierung der Sendeempfänger ermöglicht.

Besonders vorteilhaft ist es, wenn die Sendeempfänger in den Pausen ihres periodischen Meldungsabtauschs in an sich bekannter Weise in einen energiesparenden Schlafmodus verfallen, aus welchem der zweite Sendeempfänger jeweils vor dem ersten Sendeempfänger erwacht. Dadurch wird ein niedriger Energieverbrauch erzielt, ohne daß die Gefahr besteht, daß der zweite Sendeempfänger eine Statusmeldung versäumt.

Gemäß einer weiteren vorteilhaften Ausführungsform enthalten die Statusmeldung und die Bestätigungsmeldung jeweils zumindest eine eindeutige Kennung, welche in einem Initialisierungsschritt zwei einander zugeordneten Sendeempfängern zugewiesen wird, woraufhin jeder Sendeempfänger nur mehr Status- bzw. Bestätigungsmeldungen des zugeordneten anderen Sendeempfängers verarbeitet. Dadurch können mehrere Vorrichtungen in ein und demselben Gebiet betrieben werden, ohne daß es zu gegenseitigen Störungen kommt; nach dem "Anlernen" zweier Sendeempfänger im Initialisierungsschritt reagieren diese nur noch aufeinander.

In einem zweiten Aspekt erreicht die Erfindung ihre Ziele mit einer Vorrichtung der einleitend genannten Art, die sich dadurch auszeichnet, daß der zweite Sendeempfänger dazu ausgebildet ist, aus einem Vergleich der Empfangsleistung mit der in einer Statusmeldung angegebenen Sendeleistung die für die nächste Statusmeldung zu verwendende Sendeleistung zu ermitteln und in einer Bestätigungsmeldung an den ersten Sendeempfänger zurückzusenden.

Bevorzugt ist der zweite Sendeempfänger dazu ausgebildet, die Bestätigungsmeldung mit der für die nächste Statusmeldung ermittelten Sendeleistung zu senden.

Besonders günstig ist es, wenn der zweite Sendeempfänger dazu ausgebildet ist, für jede Statusmeldung die Differenz aus angegebener Sendeleistung und gemessener Empfangsleistung zu bilden und mit einem Schwellwert zu vergleichen und bei einem Schwellwertunterschreiten die für die nächste Statusmeldung zu verwendende Sendeleistung bis auf einen Minimalwert zu verringern, hingegen bei einem Schwellwertüberschreiten bis auf einen Maximalwert zu erhöhen und in letzterem Fall, wenn die angegebene Sendeleistung bereits den Maximalwert hat, den Alarm abzugeben.

Bezüglich der Vorteile der erfindungsgemäßen Vorrichtung und ihrer genannten bevorzugten Merkmale wird auf die obigen Ausführungen zum Verfahren verwiesen.

Eine weitere vorteilhafte Ausführungsform der erfindungsgemäßen Vorrichtung zeichnet sich dadurch aus, daß der zweite Sendeempfänger eine Anzeigeeinrichtung für die genannte Differenz von Sendeleistung und Empfangsleistung aufweist. Die Anzeigeeinrichtung kann damit auch zur Peilung verwendet werden, indem der Sendeempfänger probeweise in verschiedene Himmelsrichtungen bewegt wird und bei einer Verringerung der angezeigten Differenz - welche auf eine geringere Übertragungsdämpfung und damit eine geringere Entfernung der Sendeempfänger hinweist - diese Richtung als Peilung verwendet wird.

Vorteilhafterweise sind der erste und/oder der zweite Sendeempfänger jeweils mit einer Notruftaste ausgestattet, welche eine Notrufmeldung an den anderen Sendeempfänger absetzt, so daß die Vorrichtung auch zum Herbeirufen von Hilfe verwendet werden kann.

In jedem Fall ist es besonders günstig, wenn der zweite Sendeempfänger, und bevorzugt auch der erste Sendeempfänger, jeweils eine akustische Alarmeinrichtung und bevorzugt zusätzlich eine Vibrationsalarmeinrichtung aufweist, was die Alarmierung auch einer abgelenkten Aufsichtsperson bzw. gerufenen Person ermöglicht.

Bevorzugt werden die Sendeempfänger in Form von Armbändern ausgebildet. Dies ermöglicht einen unkomplizierten und komfortablen Einsatz und gewährleistet damit hohe Benutzerakzeptanz.

Die Erfindung wird nachstehend anhand eines in den beigeschlossenen Zeichnungen dargestellten Ausführungsbeispieles näher erläutert. In den Zeichnungen zeigen:
die Fig. 1 und 2 die Vorrichtung der Erfindung im praktischen Einsatz (Fig. 1) und in Blockschaltbildform (Fig. 2);
Fig. 3. das Verfahren der Erfindung in Form eines Sequenzdiagrammes;
Fig. 4 den im ersten Sendeempfänger ablaufenden Teil des Verfahrens der Erfindung in Flußdiagrammform; und
Fig. 5 den im zweiten Sendeempfänger ablaufenden Teil des Verfahrens der Erfindung in Flußdiagrammform.

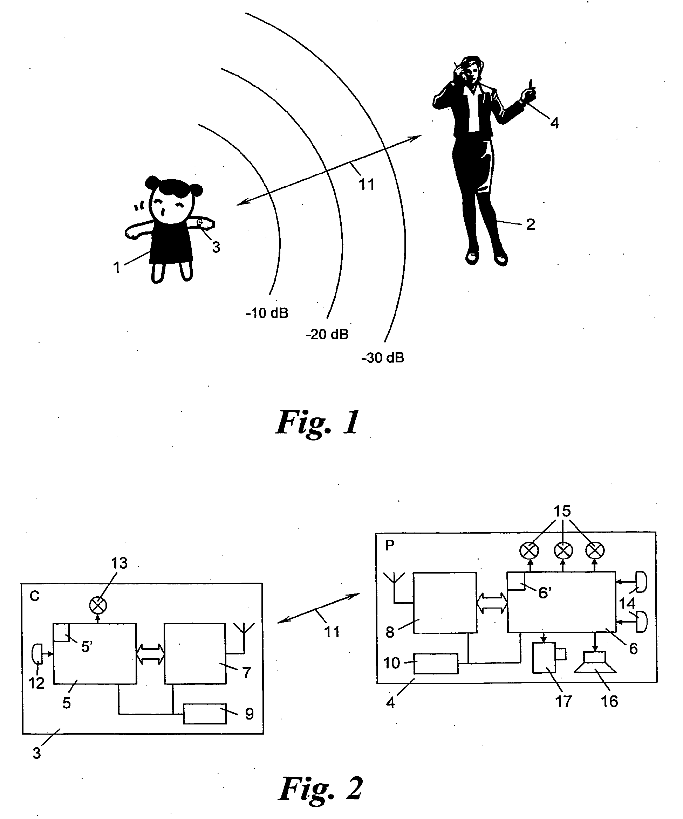

Gemäß den Fig. 1 und 2 umfaßt eine Vorrichtung zur Überwachung der Maximalentfernung zweier Objekte, z.B. eines Kindes 1 von seiner Aufsichtsperson 2, zwei Sendeempfänger 3, 4, die in Form von Armbändern ausgebildet und vom Kind 1 bzw. der Aufsichtsperson 2 getragen werden.

Jeder Sendeempfänger 3, 4 umfaßt einen Mikrokontroller 5, 6 mit einem daran angeschlossenen bidirektionalen Hochfrequenz-Transceiver 7, 8, welche Komponenten von einer Stromversorgung 9, 10, z.B. einer Knopfbatterie, gespeist werden. Über die Transceiver 7, 8 stehen die Sendeempfänger 3, 4 miteinander in Kommunikationsverbindung über einen Übertragungskanal 11.

Der erste Sendeempfänger 3 weist einen Taster 12 zur Auswahl von Betriebszuständen und eine LED 13 zur Anzeige derselben auf; in gleicher Weise ist der zweite Sendeempfänger 4 mit einer Tastatur 14 in Form von zwei Tastern zur Auswahl von Betriebszuständen und einer Anzeigeeinrichtung 15 in Form mehrerer LEDs zur Anzeige der Betriebszustände ausgestattet. Der zweite Sendeempfänger 4 umfaßt zusätzlich eine akustische Alarmeinrichtung 16 und eine Vibrationsalarmeinrichtung 17.

Optional kann auch der erste Sendeempfänger 3 mit einer Anzeigeeinrichtung 15, einer akustischen Alarmeinrichtung 16 und einer Vibrationsalarmeinrichtung 17 versehen sein.

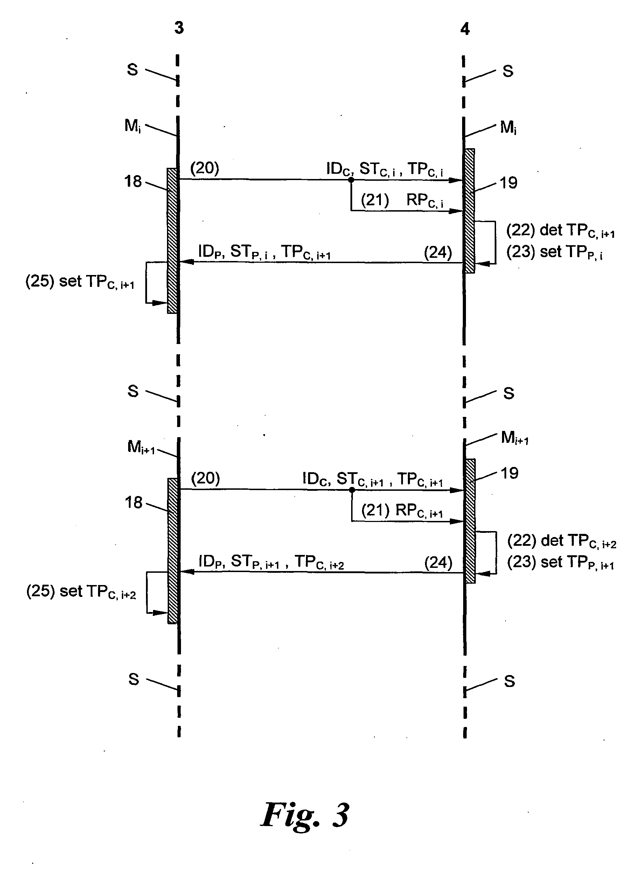

Der Meldungsverkehr zwischen den Sendeempfängern 3, 4 wird nun anhand der in den Fig. 3 bis 5 dargestellten Verfahren näher erläutert.

Fig. 3 zeigt zwei aufeinanderfolgende Meldungswechsel Mᵢ und Mᵢ₊₁ aus dem periodischen Meldungsabtausch M₁, M₂ .. M₁, Mᵢ₊₁ .. zwischen dem ersten Sendeempfänger 3 und dem zweiten Sendeempfänger 4. Zwischen den einzelnen Meldungswechseln M liegen jeweils Pausen S, deren Länge wesentlich verkürzt dargestellt ist; tatsächlich liegt die Länge eines Meldungswechsels M in der Größenordnung von µs, wogegen die Länge der Pausen S in der Größenordnung von 10 bis 100 ms liegt.

In den Pausen S verfallen die Sendeempfänger 3, 4 in einen energiesparenden Schlafmodus, aus welchem sie jeweils - von einem Zeitgeber 5', 6' im Mikrokontroller 5 bzw. 6 gesteuert - zu einem Prozeß 18, 19 erwachen. Bei jedem Meldungsabtausch M werden die Zeitgeber 5', 6' jeweils aufs Neue synchronisiert.

Wie in Fig. 3 ersichtlich, läuft der Zeitgeber 6' des Mikrocontrollers 6 für das Aufwecken des zweiten Sendeempfängers 4 geringfügig früher ab als jener des Mikrocontrollers 5 des ersten Sendeempfängers 3, so daß der Prozeß 19 jeweils kurz vor dem Prozeß 18 beginnt.

In den Prozessen 18 und 19 jedes Meldungsabtausches M sendet in einem ersten Schritt 20 der erste Sendeempfänger 3 eine Statusmeldung an den zweiten Sendeempfänger 4. Die Statusmeldung umfaßt eine eindeutige Erkennung ID_{C} des ersten Sendeempfängers 3, einen aktuellen Status ST_{C,i} des ersten Sendeempfängers 3 und eine Angabe TP_{C,i} über die aktuell verwendete Sendeleistung des Transceivers 7 des Sendeempfängers 3.

Der zweite Sendeempfänger 4 empfängt die Statusmeldung ID_{C}, ST_{C,i}, TP_{C,i} des Schrittes 2.0 und mißt in einem Schritt 21 die tatsächliche Empfangsleistung des RP_{C,i}, mit welcher die Statusmeldung am Ort des zweiten Sendeempfängers 4 von dessen Transceiver 8 empfangen wird.

Im Schritt 22 ermittelt der zweite Sendeempfänger 4 aus einem Vergleich der in der Statusmeldung ID_{C}, ST_{C,i}, TP_{C,i} angegebenen Sendeleistung TP_{C,i} mit der in Schritt 21 gemessenen Empfangsleistung RP_{C,i} die im nächsten Meldungsabtausch Mᵢ₊₁ vom ersten Sendeempfänger 3 zu verwendende Sendeleistung TP_{C,i+1} und sendet diese im Schritt 24 in Form einer Bestätigungsmeldung an den ersten Sendeempfänger 3 zurück. Die Bestätigungsmeldung umfaßt zusätzlich zu der neuen Sendeleistung TP_{C,i+1} auch eine eindeutige Kennung ID_{P} sowie einen aktuellen Status ST_{P,i} des zweiten Sendeempfängers 4. Für das Senden der Bestätigungsmeldung ID_{P}, ST_{P,i}, TP_{C,i+1} im Schritt 24 setzt der zweite Sendeempfänger 4 die Sendeleistung TP_{P,i} seines Transceivers 8 auf den soeben ermittelten Wert TP_{C,i+1} (Schritt 23).

Nach Erhalt der Bestätigungsmeldung ID_{P}, ST_{P,i}, TP_{C,i+1} im Schritt 24 setzt der erste Sendeempfänger 3 die Sendeleistung seines Transceivers 7 in Vorbereitung der nächsten Statusmeldung auf den erhaltenen Wert TP_{C,i+1} (Schritt 25). Die Sendeempfänger 3, 4 beenden ihre Prozesse 18 und 19 und verfallen wieder für eine Pause S in ihren energiesparenden Standby- bzw. Schlafmodus. Nach Ablauf der Zeitgeber 5', 6' in den Mikrokontrollern 5, 6 wachen die Sendeempfänger 3, 4 für den nächsten Meldungsabtausch Mᵢ₊₁ auf, wobei nun die Statusmeldung im Schritt 20 mit der neuen Sendeleistung TP_{C,i+1} abgesetzt wird, und so weiter und so fort.

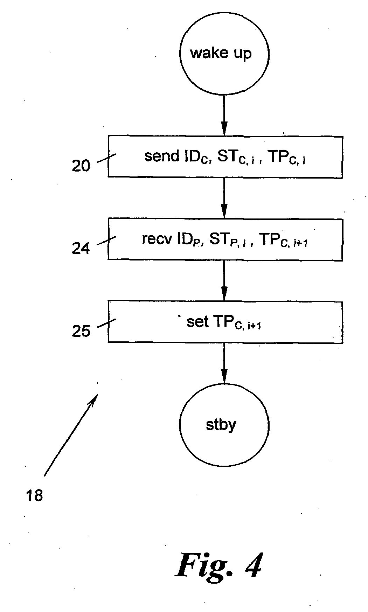

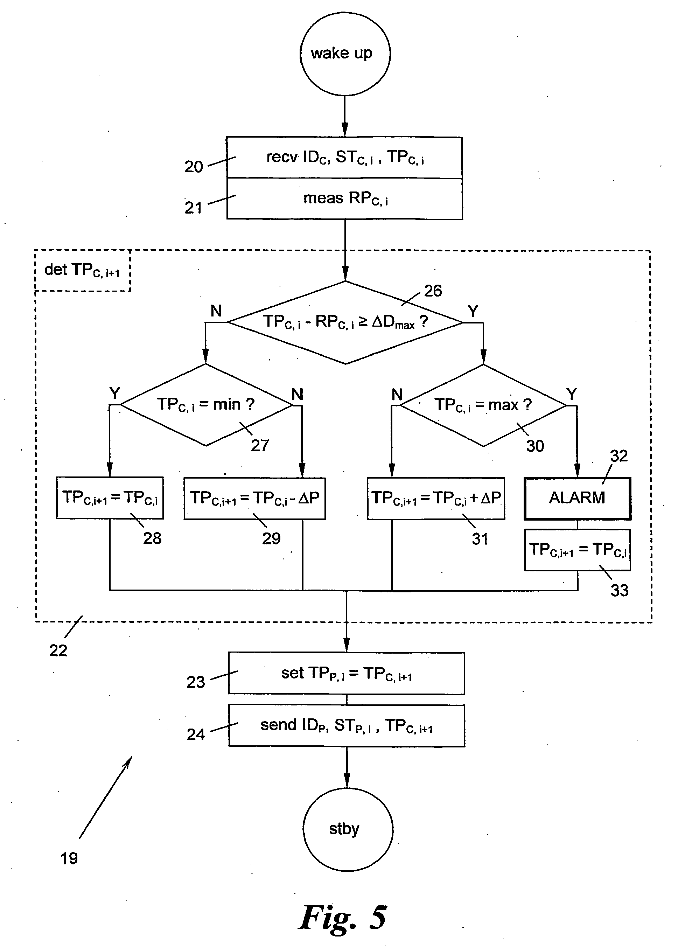

Fig. 4 zeigt den Prozeß 18 im ersten Sendeempfänger 3 und Fig. 5 den Prozeß 19 im zweiten Sendeempfänger 4 und insbesondere die Ermittlung der Sendeleistung TP_{C,i+1} im Schritt 22 im Detail.

Gemäß Fig. 5 wird im Schritt 22 in einem ersten Block 26 eine Differenz aus der in der Statusmeldung angegebenen Sendeleistung TP_{C,i} des ersten Sendeempfängers 3 und der vom zweiten Sendeempfänger 4 gemessenen Empfangsleistung RP_{C,i} gebildet und mit einem vorgegebenen Schwellwert ΔDₘₐₓ verglichen. Die Differenz TP_{C,i} - RP_{C,i} steht dabei für die Dämpfung des Übertragungskanales 11 zwischen den Sendeempfängern 3, 4 und damit für die gegenseitige Entfernung der Objekte 1, 2, hier des Kindes 1 von seiner Aufsichtsperson 2 (Fig. 1). Liegt die Differenz unterhalb des Schwellwertes, ist noch Raum für eine Reduzierung der Sendeleistung TP_{C}. Mit Hilfe der Blöcke 27, 28 und 29 wird in diesem Fall die nächste zu verwendende Sendeleistung TP_{C,i+1} - soferne sie nicht bereits einen Minimalwert min erreicht hat - um einen vorgegebenen Wert ΔP reduziert festgesetzt.

Überschreitet jedoch die Differenz TP_{C,i} - RP_{C,i} den vorgewählten Schwellwert ΔDₘₐₓ, ist die Dämpfung des Übertragungskanales 11 zu groß und - soferne die Sendeleistung TP_{C,i} nicht bereits einen maximalen Wert max erreicht hat (Überprüfung 30) - wird im Block 31 die Sendeleistung TP_{C,i+1} für den nächsten Meldungsabtausch Mᵢ₊₁ um den Wert ΔP erhöht festgesetzt.

War jedoch die Sendeleistung TP_{C,i} bereits auf ihrem Maximalwert max, ist eine weitere Erhöhung nicht mehr möglich und die übermäßige Dämpfung bzw. Differenz TP_{C,i} - RP_{C,i} ist offensichtlich auf eine unzulässige Überschreitung der Entfernung zwischen Kind 1 und Aufsichtsperson 2 zurückzuführen. In diesem Fall wird im Block 32 Alarm ausgelöst und die maximale Sendeleistung beibehalten (Block 33).

Die Erfindung ist nicht auf die dargestellten Ausführungsformen beschränkt, sondern umfaßt alle Varianten und Modifikationen, die in den Rahmen der angeschlossenen Ansprüche fallen. Beispielsweise können die Vorrichtung und das Verfahren der Erfindung auch für die Entfernungsüberwachung anderer Objekte verwendet werden, wie von Tieren oder Haustieren, zum Diebstahlschutz von Gegenständen wie Ski, Fahrräder, Kinderwagen, KFZ, zum Sichern von Lawinenopfern usw.

## Patentansprüche

1. Verfahren zur Überwachung der Maximalentfernung zweier Objekte (1, 2), insbesondere eines Kindes von seiner Aufsichtsperson, mit Hilfe zweier Sendeempfänger (3, 4), von denen der erste periodisch Statusmeldungen (ID_{C}, ST_{C,i}, TP_{C,i}) bestimmter Sendeleistung (TP_{C,i}) an den zweiten sendet, wobei im zweiten Sendeempfänger (4) ein Alarm ausgelöst wird, wenn der Empfang der Statusmeldungen abnimmt, und wobei in jeder Statusmeldung (ID_{C}, ST_{C,i}, TP_{c,i}) eine Angabe der Sendeleistung (TP_{C,i}) mitgesendet wird, **dadurch gekennzeichnet, daß** durch Vergleichen der Empfangsleistung (RP_{C,i}) mit der in einer Statusmeldung angegebenen Sendeleistung (TP_{C,i}) die für die nächste Statusmeldung zu verwendende Sendeleistung (TP_{C,i+1}) ermittelt und in einer Bestätigungsmeldung (ID_{P}, ST_{P,i}, TP_{C,i+1}) an den ersten Sendeempfänger (3) zurückgesendet wird.

2. Verfahren nach Anspruch 1, **dadurch gekennzeichnet, daß** die für die nächste Statusmeldung (ID_{C}, ST_{C,i+1}, TP_{C,i+1}) ermittelte Sendeleistung (TP_{C,i+1}) auch für das Senden der Bestätigungsmeldung (ID_{P}, ST_{P,i}, TP_{C,i+1}) verwendet wird.

3. Verfahren nach Anspruch 1 oder 2, **dadurch gekennzeichnet, daß** beim genannten Vergleichen eine Differenz (TP_{C,i} - RP_{C,i}) aus angegebener Sendeleistung und gemessener Empfangsleistung gebildet und mit einem Schwellwert (ΔDₘₐₓ) verglichen wird und bei einem Schwellwertunterschreiten die für die nächste Statusmeldung (ID_{C}, ST_{C,i+1}, TP_{C,i+1}) zu verwendende Sendeleistung (TP_{C,i+1}) bis auf einen Minimalwert (min) verringert, hingegen bei einem Schwellwertüberschreiten bis auf einen Maximalwert (max) erhöht wird, wobei in letzterem Fall, wenn die angegebene Sendeleistung (TP_{C,i+1}) bereits den Maximalwert (max) hat, der Alarm ausgelöst wird.

4. Verfahren nach einem der Ansprüche 1 bis 3, **dadurch gekennzeichnet, daß** die Sendeempfänger (3, 4) in den Pausen (S) ihres periodischen Meldungsabtauschs (M) in einen energiesparenden Schlafmodus verfallen, aus welchem der zweite Sendeempfänger (4) jeweils vor dem ersten Sendeempfänger (3) erwacht.

5. Verfahren nach einem der Ansprüche 1 bis 4, **dadurch gekennzeichnet**, die Statusmeldung (ID_{C}, ST_{C,i}, TP_{C,i}) und die Bestätigungsmeldung (ID_{P}, ST_{P,i}, TP_{C,i+1}) jeweils zumindest eine eindeutige Kennung (ID_{P}, ID_{C}) enthalten, welche in einem Initialisierungsschritt zwei einander zugeordneten Sendeempfängern (3, 4) zugewiesen wird, woraufhin jeder Sendeempfänger (3, 4) nur mehr Status- bzw. Bestätigungsmeldungen des zugeordneten anderen Sendeempfängers (4, 3) verarbeitet.

6. Vorrichtung zur Überwachung der Maximalentfernung zweier Objekte (1, 2), insbesondere eines Kindes von seiner Aufsichtsperson, mit zwei Sendeempfängern (3, 4), von denen der erste dazu ausgebildet ist periodisch Statusmeldungen (ID_{C}, ST_{C,i}, TP_{C,i}) bestimmter Sendeleistung (TP_{C,i}) an den zweiten zu senden, wobei der zweite Sendeempfänger (4) dazu ausgebildet ist einen Alarm abzugeben, wenn der Empfang der Statusmeldungen abnimmt, und wobei der erste Sendeempfänger (3) dazu ausgebildet ist in jeder Statusmeldung (ID_{C}, ST_{C,i}, TP_{C,i}) eine Angabe der verwendeten Sendeleistung (TP_{C,i}) mitzusenden, **dadurch gekennzeichnet, daß** der zweite Sendeempfänger (4) dazu ausgebildet ist, aus einem Vergleich der Empfangsleistung (RP_{C,i}) mit der in einer angegebenen Sendeleistung die für die nächste Statusmeldung zu verwendende Sendeleistung (TP_{C,i+1}) zu ermitteln und in einer Bestätigungsmeldung (ID_{P}, ST_{P,i}, TP_{C,i+1}) an den ersten Sendeempfänger (3) zurückzusenden.

7. Vorrichtung nach Anspruch 6, **dadurch gekennzeichnet, daß** der zweite Sendeempfänger (4) dazu ausgebildet ist, die Bestätigungsmeldung (ID_{P}, ST_{P,i}, TP_{C,i+1}) mit der für die nächste Statusmeldung (ID_{C}, ST_{C,i+1}, TP_{C,i+1}) ermittelten Sendeleistung (TP_{C,i+1}) zu senden.

8. Vorrichtung nach Anspruch 6 oder 7, **dadurch gekennzeichnet, daß** der zweite Sendeempfänger (4) dazu ausgebildet ist, für jede Statusmeldung (ID_{C}, ST_{C,i}, TP_{C,i}) die Differenz (TP_{C,i} - RP_{C,i}) aus angegebener Sendeleistung und gemessener Empfangsleistung zu bilden und mit einem Schwellwert (ΔDₘₐₓ) zu vergleichen und bei einem Schwellwertunterschreiten die für die nächste Statusmeldung (ID_{C}, ST_{C,i+1}, TP_{C,i+1}) zu verwendende Sendeleistung (TP_{C,i+1}) bis auf einen Minimalwert (min) zu verringern, hingegen bei einem Schwellwertüberschreiten bis auf einen Maximalwert (max) zu erhöhen und in letzterem Fall, wenn die angegebene Sendeleistung (TP_{C,i}) bereits den Maximalwert (max) hat, den Alarm abzugeben.

9. Vorrichtung nach einem der Ansprüche 6 bis 8, **dadurch gekennzeichnet, daß** der zweite Sendeempfänger (4) eine Anzeigeeinrichtung (15) für die genannte Differenz (TP_{C,i} - RP_{C,i}) von angegebener Sendeleistung und gemessener Empfangsleistung aufweist.

10. Vorrichtung nach einem der Ansprüche 6 bis 9, **dadurch gekennzeichnet, daß** der erste und/oder der zweite Sendeempfänger (3; 4) jeweils mit einer Notruftaste (12) ausgestattet sind, welche eine Notrufmeldung an den anderen Sendeempfänger (4; 3) absetzt.

11. Vorrichtung nach einem der Ansprüche 6 bis 10, **dadurch gekennzeichnet, daß** der zweite Sendeempfänger (4), und bevorzugt auch der erste Sendeempfänger (3), jeweils eine akustische Alarmeinrichtung (16) und bevorzugt zusätzlich eine Vibrationsalarmeinrichtung (17) aufweist.

12. Vorrichtung nach einem der Ansprüche 6 bis 11, **dadurch gekennzeichnet, daß** die Sendeempfänger (3, 4) in Form von Armbändern ausgebildet sind.

## Claims

1. Method for monitoring the maximum distance between two objects (1, 2), in particular of a child from its supervisor, by means of two transceivers (3, 4), the first of which periodically transmits status messages (ID_{C}, ST_{C,i}, TP_{C,i}) of a particular transmission power (TP_{C,i}) to the second, an alarm being triggered in the second transceiver (4) if the reception of the status messages decreases, and a statement of the transmission power (TP_{C,i}) also being transmitted in each status message (ID_{C}, ST_{C,i}, TP_{C,i}), **characterised in that** by comparing the reception power (RP_{C,i}) with the transmission power (TP_{C,i}) specified in a status message, the transmission power (TP_{C,i+1}) to be used for the following status message can be determined and returned to the first transceiver (3) in a confirmation message (ID_{P}, ST_{P,i}, TP_{C,i+1}).

2. Method according to claim 1, **characterised in that** the transmission power (TP_{C,i+1}) determined for the following status message (ID_{C}, ST_{C,i+1}, TP_{C,i+1}) is also used for transmitting the confirmation message (ID_{P}, ST_{P,i}, TP_{C,i+1}).

3. Method according to either claim 1 or claim 2, **characterised in that** in said comparison, a difference (TP_{C,i} - RP_{C,i}) between the specified transmission power and the measured reception power is formed and compared with a threshold value (ΔDₘₐₓ), and if the difference falls below the threshold value, the transmission power (TP_{C,i+1}) to be used for the following status message (ID_{C}, ST_{C,i+1}, TP_{C,i+1}) is reduced to a minimum value (min), whereas if the difference exceeds the threshold value, said transmission power is increased to a maximum value (max), the alarm being triggered in the latter case if the specified transmission power (TP_{C,i+1}) is already equal to the maximum value (max).

4. Method according to any one of claims 1 to 3, **characterised in that** the transceivers (3, 4) enter a power-saving sleep mode in the pauses (S) in their periodic message exchange (M), the second transceiver (4) waking up from said sleep mode before the first transceiver (3) in each case.

5. Method according to any one of claims 1 to 4, **characterised in that** the status message (ID_{C}, ST_{C,i}, TP_{C,i}) and the confirmation message (ID_{P}, ST_{P,i}, TP_{C,i+1}) each contain at least one unique identifier (ID_{P}, ID_{C}) which is allocated to two mutually associated transceivers (3, 4) in an initialisation step, whereupon each transceiver (3, 4) only continues to process status and confirmation messages from the other, associated transceiver.

6. Device for monitoring the maximum distance between two objects (1, 2), in particular of a child from its supervisor, comprising two transceivers (3, 4), the first of which is configured periodically to transmit status messages (ID_{C}, ST_{C,i}, TP_{C,i}) of a particular transmission power (TP_{C,i}) to the second, the second transceiver (4) being configured to emit an alarm if the reception of the status messages decreases, and the first transceiver (3) being configured also to transmit a statement of the transmission power (TP_{C,i}) in each status message (ID_{C}, ST_{C,i}, TP_{C,i}), **characterised in that** the second transceiver (4) is configured to determine the transmission power (TP_{C,i+1}) to be used for the following status message, by comparing the reception power (RP_{C,i}) with the transmission power (TP_{C,i}) specified in a status message, and to return said transmission power to the first transceiver (3) in a confirmation message (ID_{P}, ST_{P,i}, TP_{C,i+1}).

7. Device according to claim 6, **characterised in that** the second transceiver (4) is configured to transmit the confirmation message (ID_{P}, ST_{P,i}, TP_{C,i+1}) at the transmission power (TP_{C,i+1}) determined for the following status message (ID_{C}, ST_{C,i+1}, TP_{C,i+1}).

8. Device according to either claim 6 or claim 7, **characterised in that** the second transceiver (4) is configured to form the difference (TP_{C,i} - RP_{C,i}) between the specified transmission power and the measured reception power for each status message (ID_{C}, ST_{C,i}, TP_{C,i}) and to compare this difference with a threshold value (ΔDₘₐₓ), and if the difference falls below the threshold value, to reduce the transmission power (TP_{C,i+1}) to be used for the following status message (ID_{C}, ST_{C,i+1}, TP_{C,i+1}) to a minimum value (min), but if the threshold value is exceeded, to increase said transmission power to a maximum value (max), and to emit the alarm in the latter case if the specified transmission power (TP_{C,i}) is already equal to the maximum value (max).

9. Device according to any one of claims 6 to 8, **characterised in that** the second transceiver (4) comprises a display means (15) for said difference (TP_{C,i} - RP_{C,i}) between the specified transmission power and the measured reception power.

10. Device according to any one of claims 6 to 9, **characterised in that** the first and/or the second transceivers (3; 4) are each equipped with an emergency call button (12) which despatches an emergency message to the other transceiver (4; 3).

11. Device according to any one of claims 6 to 10, **characterised in that** the second transceiver (4) and preferably also the first transceiver (3) each comprise an acoustic alarm device (16) and preferably also a vibration alarm device (17).

12. Device according to any one of claims 6 to 11, **characterised in that** the transceivers (3, 4) are configured in the form of wristbands.

## Revendications

1. Procédé pour surveiller l'éloignement maximal entre deux objets (1, 2), en particulier entre un enfant et la personne qui le garde, à l'aide de deux émetteurs-récepteurs (3, 4) dont le premier envoie périodiquement des messages d'état (ID_{c}, ST_{c,i}, TP_{c,i}) d'une certaine puissance d'émission (TP_{c,i}) à destination du deuxième, une alarme étant déclenchée dans le deuxième émetteur-récepteur (4) lorsque la réception des messages d'état diminue, et dans lequel dans chaque message d'état (ID_{c}, ST_{c,i}, TP_{c,i}) une indication de la puissance d'émission (TP_{c,i}) est envoyée, **caractérisé en ce que** la comparaison de la puissance de réception (RP_{c,i}) à la puissance d'émission (TP_{c,i}) indiquée dans un message d'état permet de déterminer la puissance d'émission (TP_{c,i+1}) à utiliser pour le message d'état suivant et de la renvoyer dans un message de confirmation (ID_{P}, ST_{P,i}, TP_{c,i+1}) au premier émetteur-récepteur (3).

2. Procédé selon la revendication 1, **caractérisé en ce que** la puissance d'émission (TP_{c,i+1}) déterminée pour le message d'état (ID_{c}, ST_{c,i+1}, TP_{c,i+1}) suivant est également utilisée pour envoyer le message de confirmation (ID_{P}, ST_{P,i}, TP_{c,i+1}).

3. Procédé selon la revendication 1 ou 2, **caractérisé en ce que** lors de ladite comparaison, une différence (TP_{c,i} -RP_{c,i}) est établie à partir de la puissance d'émission indiquée et de la puissance de réception mesurée et est comparée à une valeur de seuil (ΔDₘₐₓ), et en cas de soupassement de la valeur de seuil la puissance d'émission (TP_{c,i+1}) à utiliser pour le message d'état (ID_{c}, ST_{c,i+1}, TP_{c,i+1}) suivant est réduite jusqu'à une valeur minimale (min), alors qu'en cas de dépassement de la valeur de seuil elle est augmentée jusqu'à une valeur maximale (max), sachant que dans ce dernier cas l'alarme est déclenchée lorsque la puissance d'émission (TP_{c,i+1}) indiquée a déjà dépassé la valeur maximale (max).

4. Procédé selon l'une quelconque des revendications 1 à 3, **caractérisé en ce que** pendant les pauses (S) de leur échange de messages (M) périodique, les émetteurs-récepteurs (3, 4) passent à un mode veille d'économie d'énergie duquel le deuxième émetteur-récepteur (4) sort respectivement avant le premier émetteur-récepteur (3).

5. Procédé selon l'une quelconque des revendications 1 à 4, **caractérisé en ce que** le message d'état (ID_{c}, ST_{c,i}, TP_{c,i}) et le message de confirmation (ID_{P}, ST_{P,i}, TP_{c,i+1}) contiennent respectivement au moins une identification univoque (ID_{P}, ID_{C}) qui est affectée au cours d'une étape d'initialisation à deux émetteurs-récepteurs (3, 4) mutuellement associés, suite à quoi chaque émetteur-récepteur (3, 4) ne traite plus que des messages d'état et de confirmation provenant de l'autre émetteur-récepteur (4, 3) associé.

6. Dispositif pour surveiller l'éloignement maximal entre deux objets (1, 2), en particulier entre un enfant et la personne qui le garde, comprenant deux émetteurs-récepteurs (3, 4), dont le premier est arrangé pour envoyer périodiquement des messages d'état (ID_{c}, ST_{c,i}, TP_{c,i}) d'une certaine puissance d'émission (TP_{c,i}) à destination du deuxième, le deuxième émetteur-récepteur (4) étant arrangé pour émettre une alarme lorsque la réception des messages d'état diminue, et dans lequel le premier émetteur-récepteur (3) est arrangé pour envoyer en même temps dans chaque message d'état (ID_{c}, ST_{c,i}, TP_{c,i}) une indication de la puissance d'émission (TP_{c,i}) utilisée, **caractérisé en ce que** le deuxième émetteur-récepteur (4) est arrangé pour déterminer à partir d'une comparaison de la puissance de réception (RP_{c,i}) avec la puissance d'émission indiquée dans un message d'état la puissance d'émission (TP_{c,i+1}) à utiliser pour le message d'état suivant et la renvoyer dans un message de confirmation (ID_{P}, ST_{P,i}, TP_{c,i+1}) au premier émetteur-récepteur (3).

7. Dispositif selon la revendication 6, **caractérisé en ce que** le deuxième émetteur-récepteur (4) est arrangé pour envoyer le message de confirmation (ID_{P}, ST_{P,i}, TP_{c,i+1}) à la puissance d'émission (TP_{c,i+1}) déterminée pour le message d'état (ID_{C}, ST_{c,i+1}, TP_{c,i+1}) suivant.

8. Dispositif selon la revendication 6 ou 7, **caractérisé en ce que** le deuxième émetteur-récepteur (4) est arrangé pour établir pour chaque message d'état (ID_{c}, ST_{c,i}, TP_{c,i}) la différence (TP_{c,i} - RP_{c,i}) à partir de la puissance d'émission indiquée et de la puissance de réception mesurée et la comparer à une valeur de seuil (ΔDₘₐₓ), et en cas de soupassement de la valeur de seuil pour réduire la puissance d'émission (TP_{c,i+1}) à utiliser pour le message d'état (ID_{C}, ST_{c,i+1}, TP_{c,i+1}) suivant jusqu'à une valeur minimale (min), mais en cas de dépassement de la valeur de seuil pour l'augmenter jusqu'à une valeur maximale (max), et dans ce dernier cas, lorsque la puissance d'émission (TP_{c,i+1}) indiquée a déjà dépassé la valeur maximale (max) pour déclencher l'alarme.

9. Dispositif selon l'une quelconque des revendications 6 à 8, **caractérisé en ce que** le deuxième émetteur-récepteur (4) présente un dispositif d'indication (15) pour ladite différence (TP_{c,i} - RP_{c,i}) de la puissance d'émission indiquée et de la puissance de réception mesurée.

10. Dispositif selon l'une quelconque des revendications 6 à 9, **caractérisé en ce que** le premier et/ou le deuxième émetteur-récepteur (3 ; 4) sont respectivement munis d'un bouton d'appel d'urgence (12) qui envoie un message d'appel d'urgence à destination de l'autre émetteur-récepteur (4 ; 3).

11. Dispositif selon l'une quelconque des revendications 6 à 10, **caractérisé en ce que** le deuxième émetteur-récepteur (4), et de préférence aussi le premier émetteur-récepteur (3), présente respectivement un dispositif d'alarme acoustique (16) et de préférence en plus un dispositif d'alarme par vibration (17).

12. Dispositif selon l'une quelconque des revendications 6 à 11, **caractérisé en ce que** les émetteurs-récepteurs (3, 4) sont réalisés sous forme de bracelets.
